# EUROPEAN PATENT APPLICATION

(11) **EP 4 389 657 A1**
(43) Date of publication of application: **26.06.2024**
(21) Application number: 22215022.9
(22) Date of filing: 20.12.2022
(51) Int. Cl.: B65G 47/54

(54) **TRANSFER OF LOADS BETWEEN CONVEYOR LINES**

(71) Applicant: Swisslog AG, 5033 Buchs/Aarau (CH)
(72) Inventor: CARLSSON, Kent, 59571 Boxholm (SE)
(74) Representative: Schlotter, Alexander Carolus Paul

(57) **Abstract**

A transfer unit for transferring loads between conveyor lines comprises a first support, a second support and a cam mechanism for reversible lowering the first support from a upper position and, coupled with said lowering, lifting the second support to a upper position such that in a first/second state of the cam mechanism the second/first support is below its upper position and the first/second support is in its upper position providing a contact surface of the transfer unit at an entry/exit level for supporting a load when being transferred onto/from the transfer unit, and in an intermediate state of the cam mechanism the first and second support together provide a contact surface of the transfer unit for supporting a load. The invention also refers to a system with and a method using said transfer unit.

## Description

The present invention relates to a transfer unit, system and method for transferring loads between conveyor lines.

The object of the present invention is to improve a transfer of loads between conveyor lines and/or a transfer unit and/or system for that purpose.

This object is achieved in particular by a transfer unit with the features of claim 1. Claims 9, 10 refer to a system comprising a transfer unit as described herein or a method for transferring loads with the aid of a transfer unit or system as described herein respectively. Subclaims relate to advantageous embodiments.

According to one aspect of the present invention a system for transferring loads between conveyor lines comprises
- a first conveyor line which transfers loads to a transfer unit in an input transfer direction or is configured or used for said purpose respectively,
- a second conveyor line which transfers (said) loads from said transfer unit in an output transfer direction or is configured or used for said purpose respectively, and
- said transfer unit for transferring loads between said conveyor lines.

According to one embodiment the loads are cargo or unit loads respectively, preferably packaged goods or the like and/or mixed cargo and/or (on) pallets. The first conveyor line may comprise, preferably be, a belt or belt-driven conveyor, chain or chain-driven conveyor or the like, most preferably a roller or wheeled conveyor. The second conveyor line may comprise, preferably be, a belt or belt-driven conveyor, chain or chain-driven conveyor or the like, most preferably a roller or wheeled conveyor.

According to an embodiment a transfer direction of the loads is changed by or via the transfer unit respectively, preferably the input transfer direction and output transfer direction form an angle of at least 30°, preferably at least 45°, more preferably at least 75°, further preferably 90°.

According to an embodiment the transfer unit transfers loads selectively in different operation modes and/or between at least three conveyor lines, preferably:
- in one operation mode from the first conveyor line to the second conveyor line and at least one of:
- in a further operation mode from the second conveyor line to the first conveyor line; and/or
- in a further operation mode from the first conveyor line to a further conveyor line, preferably in the input transfer direction, and/or from a, preferably said, further conveyor line to the first conveyor line; and/or
- in a further operation mode from a, preferably said, further conveyor line, to the second conveyor line, preferably in the output transfer direction, and/or from the second conveyor line to a, preferably said, further conveyor line,
or is configured or used for said purpose respectively.

The present invention is particularly advantageous for such applications without being limited thereto. In particular, according to an embodiment the input transfer direction and output transfer direction may form an angle of less than 30°, preferably less than 15°, more preferably less than 10°, further preferably 0°. In this respect it should be noted that an (input/output) transfer direction in the context of the present invention may preferably be a horizontal direction or inclined with respect to a horizontal direction, preferably not more than 45° and/or at least comprising a horizontal component, and/or may include two opposite or antiparallel directions respectively, an (input/output) transfer direction may in particular define or describe forward and backward movement of a load along a horizontal or inclined curve, preferably a straight line, respectively. Thus, transferring a load onto the transfer unit in an/the (input/output) transfer direction and transferring a load from the transfer unit in said (input/output) transfer direction may in particular define or describe antiparallel movements of said load.

According to one embodiment or aspect of the present invention a or said transfer unit respectively comprises:
- a first support;
- a second support; and
- a cam mechanism which reversibly lowers the first support from a, preferably upmost or highest, upper position of said first support and, coupled with said lowering, lifts the second support to a, preferably upmost or highest, upper position of said second support such that
   - in a first state of the cam mechanism
      - the second support is below its upper position, and
      - the first support is in its upper position providing a, in particular the, contact surface of the transfer unit at an entry level (for) supporting a load when being transferred onto the transfer unit from a/the first conveyor line in an/the input transfer direction;
   - in a second state of the cam mechanism
      - the first support is below its upper position and
      - the second support is in its upper position providing a, in particular the, contact surface of the transfer unit at an exit level (for) supporting a, in particular said, load when being transferred from the transfer unit onto a/the second conveyor line in an/the output transfer direction, the output transfer direction preferably being different from the input transfer direction; and
   - in an intermediate state of the cam mechanism the first and second support together provide a contact surface of the transfer unit for supporting a load, wherein preferably the first and second support both are in their upper position respectively,
or is configured or used for said purpose respectively.

The entry and exit level may be a horizontal level defined by the transfer unit, in particular its first and second support in their upper position respectively and/or (defined by) an interface, in particular connection, of the transfer unit to the first and second conveyor line, in particular an, preferably upmost, contact surface (for) supporting loads upon transfer from the first conveyor line onto the transfer unit or from the transfer unit onto the second conveyor line respectively.

Preferably said (cam mechanism is configured such that said) reversible lowering (of) the first support and lifting (of) the second support is coupled such that the second support is lifted to its upper position while the first support remains in its upper position (thus establishing an intermediate state of the cam mechanism according to one embodiment), subsequently the first support is lowered while the second support, at least essentially, remains in its upper position (thus establishing a second state of the cam mechanism), preferably subsequently the first support being lifted again to its upper position with the second support remaining in its upper position (thus again establishing an intermediate state of the cam mechanism according to one embodiment), and subsequently the second support being lowered with the first support remaining in its upper position (thus establishing a first state of the cam mechanism).

According to one embodiment support of the load is passed from the first support, which supports the load upon transfer onto the transfer unit, to the second support which supports the load upon transfer onto the second conveyor line. Said passing can improve transfer and in particular change of the transfer direction from the input to the output transfer direction since the first and second support can provide or guide said different transfer directions respectively. Using a cam mechanism can advantageously improve said lifting and lowering, in particular can provide a compact, economic, precise and/or reliable lift.

According to one embodiment (the transfer unit, in particular its cam mechanism, is configured such that)
- a vertical distance between the common contact surface of the transfer unit provided by the first and second support in the intermediate state of the cam mechanism and the contact surface of the transfer unit at the entry level provided by the first support in the first state of the cam mechanism; and/or
- a vertical distance between the common contact surface of the transfer unit provided by the first and second support in the intermediate state of the cam mechanism and the contact surface of the transfer unit at the exit level provided by the second support in the second state of the cam mechanism; and/or
- a vertical distance between the contact surface of the transfer unit at the entry level provided by the first support in the first state of the cam mechanism and the contact surface of the transfer unit at the exit level provided by the second support in the second state of the cam mechanism
is less than 10 mm, preferably less than 2 mm, more preferably less than 1 mm, even more preferably is 0 mm.

According to one embodiment (the transfer unit, in particular its cam mechanism, is configured such that) a vertical movement of a load while being transferred from the first conveyor line to the second conveyor line via the transfer unit, in particular between transfer onto the transfer unit from the first conveyor line and transfer onto the second conveyor line from the transfer unit, is less than 10 mm, preferably less than 2 mm, more preferably less than 1 mm, even more preferably is 0 mm. Accordingly to a preferred embodiment (the transfer unit, in particular its cam mechanism, is configured such that) transfer from the first conveyor line to the second conveyor line via the transfer unit is carried out, at least essentially, at one (vertical) level.

Limiting, preferably avoiding, vertical movement of the load, in particular by limiting, preferably avoiding, vertical displacement, of the contact surface (for) supporting a load during transfer from the first conveyor line to the second conveyor, can advantageously reduce energy consumption and/or transfer time. This can be realized particularly advantageously by a cam mechanism as described herein, in particular in a compact, economic, precise and/or reliable way.

According to one embodiment the first support comprises at least one first base and the cam mechanism comprises a first guidance which, preferably mechanically and/or forcibly or positively respectively, guides said at least one first base in (its) lifting, preferably vertical, direction, preferably restricting, more preferably prohibiting, lateral movement of said at least one first base at least in its lengthwise direction, preferably in horizontal direction, and/or at least one first cam which lifts said (guided) first base into its upper position, thereby lifting the first support into its upper position, or is/are configured or used for said purpose respectively. Additionally or alternatively the second support may comprise at least one second base and the cam mechanism may comprise a second guidance which, preferably mechanically and/or forcibly or positively respectively, guides said at least one second base in (its) lifting, preferably vertical, direction, preferably restricting, more preferably prohibiting, lateral movement of said at least one second base at least in its lengthwise direction, preferably in horizontal direction, and/or at least one second cam for lifting said (guided) second base into its upper position, thereby lifting the second support into its upper position.

Such a cam mechanism can advantageously improve the lifting and lowering, particularly can provide a compact, economic, precise and/or reliable lift.

According to one embodiment the cam mechanism comprises at least one additional first cam for lifting said at least one first base into its upper position and/or at least one additional second cam for lifting said at least one second base into its upper position.

Using at least two cams (the at least one and the at least one additional) can advantageously improve the lifting and lowering, in particular can provide a compact, economic, precise and/or reliable lift.

According to one embodiment the first support comprises at least one further first base and the cam mechanism comprises a further first guidance for, preferably mechanically and/or forcibly or positively respectively, guiding said at least one further first base in (its) lifting, preferably vertical, direction, preferably restricting, more preferably prohibiting, lateral movement of said at least one further first base at least in its lengthwise direction, preferably in horizontal direction, and/or at least one further first cam, preferably said at least one further first cam and at least one additional further first cam, for lifting said at least one further first base into its upper position, the first support being lifted into its upper position corporately by said (guided) lifting of said at least two first bases into their upper positions.

Additionally or alternatively the second support may comprise at least one further second base and the cam mechanism may comprise a further second guidance for, preferably mechanically and/or forcibly or positively respectively, guiding said at least one further second base in (its) lifting, preferably vertical, direction, preferably restricting, more preferably prohibiting, lateral movement of said at least one further second base at least in its lengthwise direction, preferably in horizontal direction, and at least one further second cam, preferably said at least one further second cam and/or at least one additional further second cam, for lifting said at least one further second base into its upper position, the second support being lifted into its upper position corporately by said (guided) lifting of said at least two second bases into their upper positions.

Preferably the at least one first base and the at least one further first base are oriented parallel to each other, particularly in a horizontal plane. Additionally or alternatively the at least one second base and the at least one further second base may be oriented parallel to each other, in particular in a horizontal plane. Additionally or alternatively the at least one first base and the at least one second base may be oriented parallel to each other, in particular while being moved vertically with respect to one another.

Using at least two, preferably parallel, bases (at least one and at least one further) can advantageously improve the lifting and lowering, in particular can provide a compact, economic, precise and/or reliable lift.

According to one embodiment a guidance mentioned herein comprises at least one, preferably at least two, guid(e/-ance) grooves in which a pin is guided, wherein either the groove or the pin may be arranged at the respective basis. However, also other realizations, e.g. the bar(s) gliding along guidance rails, bars, rods or the like, may be advantageous.

According to one embodiment the cam mechanism comprises at least one drive shaft comprising said at least one first cam for lifting said at least one first base and said at least one second cam for lifting said at least one second base.

Preferably said one drive shaft further also comprises said at least one further first cam for lifting said at least one further first base and/or said at least one further second cam for lifting said at least one further second base.

The cam mechanism may comprise at least one additional drive shaft comprising said at least one additional first cam for lifting said at least one first base, preferably said at least one additional first cam for lifting said at least one first base and said at least one additional further first cam for lifting said at least one further first base, and/or said at least one additional second cam for lifting said at least one second base, preferably said at least one additional second cam for lifting said at least one second base and said at least one additional further second cam for lifting said at least one further second base.

By (rotating) such drive shaft(s) the respective cams can be actuated in an advantageous way, in particular a compact, economic, precise and/or reliable way. In a preferred embodiment the cam mechanism comprises at least two, preferably parallel, drive shafts, each drive shaft comprising at least four cams for coupled lifting an lowering of at least two bases of the first support and at least two bases of the second support by, preferably synchronous, rotating of said shafts.

According to one embodiment the transfer unit comprises at least one (common) drive which rotates the at least two drive shafts or is configured or used for said purpose respectively. Preferably the at least one drive comprises at least one (common) electromotor and/or rotates the at least two drive shafts synchronous and/or via belt transmission(s).

By (rotating) the drive shafts by at least one common drive, in particular via belt transmission(s), the drive shafts and cams can be actuated in an even more advantageous way, in particular a compact, economic, precise and/or reliable way.

According to one embodiment the at least one first base and/or the at least one further first base and/or the at least one second base and/or the at least one further second base (each) comprises at least one movable, preferably rotatable, transport element, preferably one or more transport rollers, one or more transport wheels or one or more transport chains. Preferably the transport element(s) of the first (base(s) of the first) support and the transport element(s) of the second (base(s) of the second) support provide or guide or facilitate transfer in different transfer directions respectively, in particular the transport element(s) of the first (base(s) of the first) support may provide or guide or facilitate transfer in the input transfer direction respectively and the transport element(s) of the second (base(s) of the second) support may provide or guide or facilitate transfer in the output transfer direction respectively. According to one embodiment the at least one first base and/or the at least one further first base (each) comprises at least one transport roller or wheel rotatable around a rotation axis extending in a lengthwise direction of the first base or further first base respectively and the at least one second base and/or the at least one further second base (each) comprises at least one transport roller or wheel or, particularly preferred, transport chain rotatable around a rotation axis extending perpendicular to a lengthwise direction of the second base or further second base respectively or vice versa the at least one second base and/or the at least one further second base (each) comprises at least one transport roller or wheel rotatable around a rotation axis extending in a lengthwise direction of the second base or further second base respectively and the at least one first base and/or the at least one further first base (each) comprises at least one transport roller or wheel or, particularly preferred, transport chain rotatable around a rotation axis extending perpendicular to a lengthwise direction of the first base or further first base respectively.

Thereby the first and second support can advantageously provide, in particular guide or facilitate transfer in, the input and output transfer direction respectively.

According to one embodiment the at least one drive shaft is, preferably the at least one drive shaft and the at least one additional drive shaft are, rotatable in(to):
- at least one first rotational position, preferably a first rotational range, in which the first support is positioned by the first cam or first cams respectively in its upper position and the second support is positioned by the second cam or second cams respectively below its upper position, preferably is positioned by the second cam or second cams respectively in a, preferably lowermost or deepest, bottom position of the second support in said at least one first rotational position, in particular in at least one first rotational position within said first rotational range; and
- at least one second rotational position, preferably 180° from the first rotational position, in which the second support is positioned by the second cam or second cams respectively in its upper position and the first support is positioned by the first cam or first cams respectively below its upper position, preferably is positioned by the first cam or first cams respectively in a, preferably lowermost or deepest, bottom position of the first support. According to an embodiment the drive shaft(s) is/are rotatable in(to) at least one second rotational range, preferably comprising said at least one second rotational position 180° from the first rotational position, in which the second support is positioned by the second cam or second cams respectively in its upper position and the first support is positioned by the first cam or cams respectively below its upper position.

Preferably the at least one drive shaft, in particular the at least one drive shaft and the at least one additional drive shaft, may be rotatable in(to) at least one further rotational position, preferably 90° or 270° from the first rotational position, in which the first support is positioned by the first cam or first cams respectively in its upper position and the second support is positioned by the second cam or second cams respectively in its upper position. According to an embodiment the drive shaft(s) is/are rotatable in(to) at least one (intermediate) rotational range, preferably comprising said at least one further rotational position 90° or 270° from the first rotational position, in which the first and second support are positioned by the first and second cam(s) in their upper positions.

A positional range mentioned herein may preferably comprise at least 5°, more preferably at least 10°.

Such a cam mechanism can advantageously improve the lifting and lowering, in particular can provide a compact, economic, precise and/or reliable lift.

According to one aspect of the present invention a method for transferring loads between conveyor lines, preferably changing a transfer direction, using a system as described herein comprises the steps:
- transferring at least one load from the first conveyor line onto the first support with the cam mechanism being in its first state (such that the second support is below its upper position and the first support is in its upper position providing the contact surface of the transfer unit at the entry level (for) supporting said load(s) while being transferred onto the transfer unit from the first conveyor line in the input transfer direction);
- bringing the cam mechanism from its first state into its intermediate state and then into its second state so as to pass support of said load from the first to the second support; and
- transferring the load from the second support onto the second conveyor line with the cam mechanism being in its second state (such that the first support is below its upper position and the second support is in its upper position providing the contact surface of the transfer unit at the exit level (for) supporting said load(s) while being transferred from the transfer unit onto the second conveyor line in the output transfer direction.

As comes clear from the description, the cam mechanism preferably is brought from its first state into its intermediate state and then into its second state by rotating the first and second cam(s), preferably by rotating the drive shaft(s), preferably by the (common) drive, from their first rotational position via a further rotational position into their second rotational position and preferably rotating further into their first rotational position again via another further rotational position or rotating reversely back into their first rotational position again (via the same or first further rotational position respectively).

According to one embodiment the method further comprises the steps:
- transferring at least one further load from a conveyor line, preferably
   - the first conveyor line or
   - a third conveyor line
      and/or
   - in the input transfer direction
   onto the first support with the cam mechanism being in its first state and
   - transferring said load from the first support onto another conveyor line of the system, preferably
      - transferring the load received from the first conveyor line to said third conveyor line or
      - transferring the load received from said third conveyor line to the first conveyor line,
with the cam mechanism being in its first state, preferably the cam mechanism being maintained in its first state during said transfer, whereby preferably a transfer direction of said further load is maintained.

According to one embodiment the method further comprises the steps:
- transferring at least one further load from a conveyor line, preferably
   - the second conveyor line or
   - a(nother) third conveyor line
      and/or
   - in the output transfer direction
   onto the second support with the cam mechanism being in its second state and
- transferring said load from the second support onto another conveyor line of the system, preferably
   - transferring the load received from the second conveyor line to said (other) third conveyor line or
   - transferring the load received from the (other) third conveyor line to the second conveyor line,
with the cam mechanism being in its second state, preferably the cam mechanism being maintained in its second state during said transfer, whereby preferably a transfer direction of said further load is maintained.

According to one embodiment the method further comprises the step:
- transferring at least one further load between the first or second conveyor line and a(nother) or the third conveyor line of the system via the transfer unit changing a transfer direction by
   - receiving said further load with the transfer unit's cam mechanism in the first state and dispensing said further load with the transfer unit's cam mechanism in the second state; or
   - receiving said further load with the transfer unit's cam mechanism in the second state and dispensing said further load with the transfer unit's cam mechanism in the first state,
whereby preferably a transfer direction of said further load is changed via the transfer unit.

Further advantages and features can be gathered from the dependent claims and the exemplary embodiments. Hereto it is shown, partly schematically, in:
- Fig. 1:: a system for transferring loads between conveyor lines according to one embodiment of the present invention;
- Fig. 2:: a transfer unit of the system according to one embodiment of the present invention;
- Fig. 3:: a drive shaft of the transfer unit;
- Figs. 4A-C:: a drive shaft and a first and second support of the transfer unit in a first state of a cam mechanism of the transfer unit;
- Figs. 5A-C:: the features of figs. 4A-C in an intermediate state of the cam mechanism;
- Figs. 6A-C:: the features of figs. 4A-C in a second state of the cam mechanism; and
- Figs. 7A-C:: the features of figs. 4A-C in a further intermediate state of the cam mechanism.

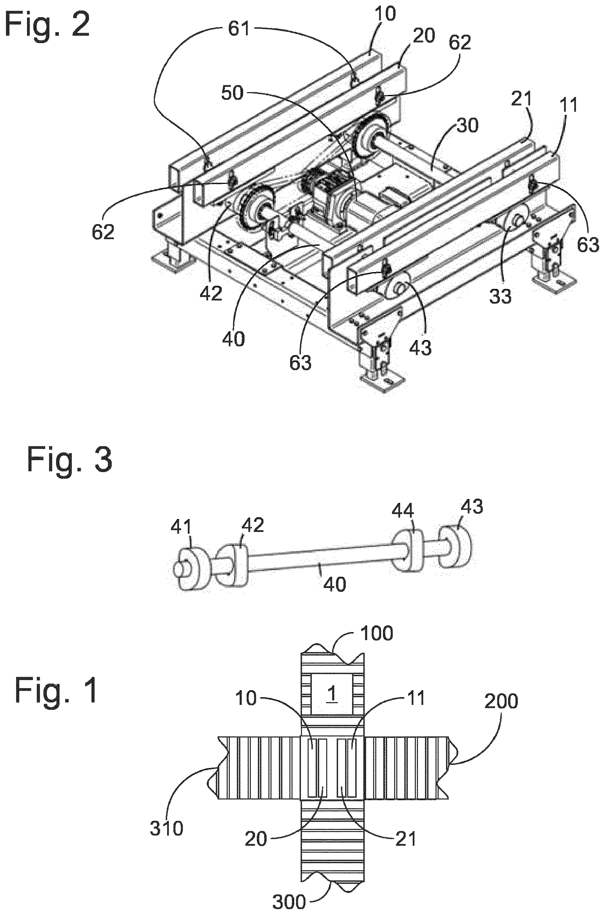

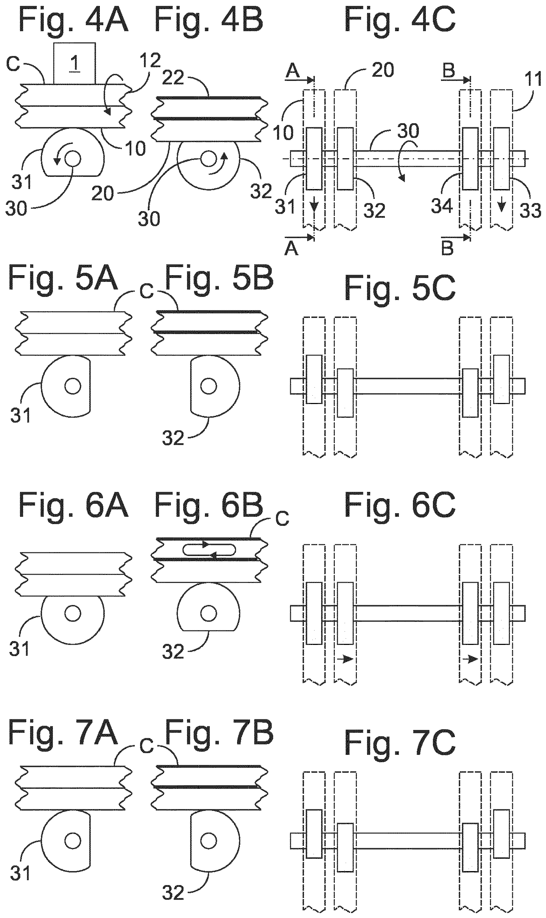

Fig. 1 shows an exemplary embodiment of a system according to one of the present invention, comprising a transfer unit described in more detail in particular with respect to figs. 2-7, a first conveyor line 100 for transferring a load 1 to the transfer unit in an input transfer direction (vertically downwards in Fig. 1, 4C), a second conveyor line 200 for transferring the load 1 from the transfer unit in an output transfer direction (horizontally to the right in Fig. 1, 6C) perpendicular to the input transfer direction, thus changing a transfer direction.

The system may further comprise one or more third conveyor lines 300, 310 so that a load may selectively be transferred from one conveyor line to another conveyor line, either maintaining of changing a transfer direction, e.g. from conveyor line 100 selectively to conveyor line 200 (changing transfer direction) or conveyor line 300 (if present; maintaining transfer direction) or conveyor line 310 (if present; changing transfer direction), from conveyor line 200 selectively to conveyor line 100 (changing transfer direction), conveyor line 300 (if present; changing transfer direction) or conveyor line 310 (if present; maintaining transfer direction change) or the like.

The transfer unit is shown in more detail in figs. 2-7. However, some features optionally provided are not shown in order to improve intelligibility.

The transfer unit comprises a cam mechanism and a first support which - in the exemplary embodiment - comprises a first base 10 and a further first base 11. Said first bases each may comprise at least one transport roller 12 in the exemplary embodiment.

The transfer unit further comprises second support which - in the exemplary embodiment - comprises a second base 20 and a further second base 21. Said second bases each may comprise at least one transport chain 22.

It should be emphasized that this is only an exemplary embodiment and the first and/or second support may comprise further bases and/or different transport elements functioning correspondingly, in particular providing or guiding or facilitating transfer in the input (cf. transport roller 12) or output (cf. transport chain 22) transfer direction.

The cam mechanism comprises a drive shaft 30 comprising a first cam 31, a second cam 32, a further first cam 33 and a further second cam 34. The cam mechanism further comprises an identical additional drive shaft 40 comprising a first additional cam 41, a second additional cam 42, an additional further first cam 43 and an additional further second cam 44.

The transfer unit comprises at least one drive 50 which commonly rotate these two drive shafts 30, 40 or is configured or used for this purpose respectively.

The cam mechanism further comprises a first guidance 61 positively guiding said first base 10 in lifting or vertical direction respectively, a second guidance 62 positively guiding said second base 20 in lifting or vertical direction respectively, a further first guidance 63 positively guiding said further first base 11 in lifting or vertical direction respectively, and a further second guidance analogously positively guiding said further second base 21 in lifting or vertical direction respectively.

With reference in particular to figs. 4A - 7C, operation of the system or a method for transferring loads between conveyor lines according to according to one embodiment of the present invention respectively will be explained.

As indicated in fig. 4C, figs. 4A, 5A, 6A and 7A show a view along rotation axis of the drive shaft 30 upon the first cam 31 while figs. 4B, 5B, 6B and 7B show a view along said rotation axis upon the second cam 32 (views on the further first cam 33 and the further second cam 34 as well as views on the additional first cam 41, the additional second cam 42, the additional further first cam 43 and the additional further second cam 44 along parallel rotation axis of the drive shaft 40 would look the same).

The cam mechanism already is in or is brought into a first state illustrated in figs. 4A-4C. As one can see, the second base 20 (and analogously the further second base 21) of the second support are in bottom position, thus placing the second support below its upper position in its bottom position as well. At the same time, the first base 10 (and analogously the further first base 11) of the first support are in their upper position, thus placing the first support in its upper position as well. Thus the (transport rollers of the first bases of the) first support provide a contact surface C of the transfer unit at an entry level for supporting load 1 when being transferred onto the transfer unit from the first conveyor line 100 in the input transfer direction.

After load 1 has been transferred onto the (transport rollers of the first bases of the first support of the) transfer unit from the first conveyor line 100, drive 50 rotates both drive shafts 30, 40 simultaneously by 90° as indicated by the motion arrows in figs. 4A - 4C, from the first rotational position illustrated in figs. 4A - 4C into a further rotational position illustrated in figs. 5A - 5C, bringing the cam mechanism into an intermediate state illustrated in figs. 5A - 5C.

As one can see, in said rotational position or intermediate state illustrated in figs. 5A - 5C respectively, the first base 10 and second base 20 (and analogously the further first base 11 and further second base 21) of the first and second support are in their upper position respectively, thus placing the first and second support in its upper position respectively as well. Thus the (transport rollers of the first bases of the) first support and the (transport chains of the second bases of the) second support together provide a contact surface of the transfer unit for supporting load 1.

Drive 50 rotating both drive shafts 30, 40 simultaneously further by another 90°, from said further rotational position illustrated in figs. 5A - 5C into a second rotational position illustrated in figs. 6A - 6C brings the cam mechanism into a second state illustrated in figs. 6A - 6C.

As one can see, in said second rotational position or second state of the cam mechanism illustrated in figs. 6A - 6C respectively, now vice versa the first base 10 (and analogously the further first base 11) of the first support are in bottom position, thus placing the first support below its upper position in its bottom position as well and at the same time, the second base 20 (and analogously the further second base 21) of the second support now are in their upper position, thus placing the second support in its upper position as well. Thus the (transport chains of the second bases of the) second support now provide the contact surface C of the transfer unit at an exit level for supporting load 1 when being transferred from the transfer unit onto the second conveyor line 20 in the output transfer direction.

In this state (see figs. 6A-6C) load 1 is transferred from the (transport chains of the second bases of the second support of the) transfer unit onto the second conveyor line 20 in the output transfer direction.

Drive 50 may again rotate both drive shafts 30, 40 simultaneously further by another 90°, from said second rotational position illustrated in figs. 6A - 6C into another further rotational position illustrated in figs. 7A - 7C bringing the cam mechanism into another intermediate state illustrated in figs. 7A - 7C.

As can be understood in particular from figs. 4A-7C, the contact surface C of the transfer unit for supporting a load from being transferred onto the transfer unit until being transferred off the transfer unit, in particular contact surface of the transfer unit at the entry level provided by the first support in the first state of the cam mechanism, contact surface of the transfer unit at the exit level provided by the second support in the second state of the cam mechanism as well as the common contact surface of the transfer unit provided by the first and second support in the intermediate states of the cam mechanism always is at the same vertical height such that a vertical movement of a load while being transferred from the first conveyor line to the second conveyor line via the transfer unit is 0 mm. Of course, some vertical movement may occur and may be tolerated, wherein the smaller such vertical movement is, the more energy and/or transfer time can be saved. However, it may be beneficial to compensate, preferably minor, height differences between conveyor lines via the transfer limits via adjusting the vertical movement between entry and exit level accordingly.

Same applies when a load inversely is transferred from the second conveyor line 200 to the first conveyor 100 line via the transfer unit, starting in the second state illustrated in figs. 6A-6C for transferring the load from the second conveyor 200 line onto the (transport chains of the second bases of the) second support, followed by rotating the drive shafts 30, 40 to bring the cam mechanism into its first state illustrated in figs. 4A-4C (either by rotating into the rotational position shown in figs. 7A-7C and further into the rotational position shown in figs. 4A-4C or into the rotational position shown in figs. 5A-5C and further into the rotational position shown in figs. 4A-4C) for transferring the load from the (transport rollers of the first bases of the first support of the) transfer unit onto the first conveyor line 100.

If a load is to be transferred between conveyor lines 100, 300, the cam mechanism will be (brought) in(to) its first state illustrated in figs. 4A-4C, thus the (transport rollers of the first bases of the first support of the) transfer unit also providing a contact surface of the transfer unit at the respective exit level for supporting the load when being transferred from the transfer unit onto the conveyor line 100 or 300 respectively.

Correspondingly, if a load is to be transferred between conveyor lines 200, 310, the cam mechanism will be (brought) in(to) its second state illustrated in figs. 6A-6C, thus the (transport chains of the second bases of the second support of the) transfer unit also providing a contact surface of the transfer unit at the respective entry level for supporting the load when being transferred onto the transfer unit.

Correspondingly, transfer directions may be changed by the transfer unit when transferring loads between conveyor lines 100 and 310 and/or when transferring loads between conveyor lines 200 and 300 and/or when transferring loads between conveyor lines 300 and 310.

Although exemplary embodiments have been discussed in the preceding description, it should be pointed out that a large number of modifications are possible. It should also be pointed out that the exemplary embodiments are only examples that are not intended to limit the scope of protection or the possible applications and structure of the invention in any way. Rather, the person skilled in the art is given a guide for the realisation of at least one exemplary embodiment by the preceding description, wherein various modifications, in particular with regard to the function and arrangement of the described components or features, may be realized without leaving the scope of protection as derived from the claims and features combinations equivalent thereto respectively.

### Reference signs

- 1: load
- 10: first base
- 11: further first base
- 12: transport roller
- 20: second base
- 21: further second base
- 22: transport chain
- 30: drive shaft
- 31: first cam
- 32: second cam
- 33: further first cam
- 34: further second cam
- 40: additional drive shaft
- 41: additional first cam
- 42: additional second cam
- 43: additional further first cam
- 44: additional further second cam
- 50: drive
- 61: first guidance
- 62: second guidance
- 63: further first guidance
- 100: first conveyor line
- 200: second conveyor line
- 300, 310: further conveyor line
- C: contact surface

## Claims

1. A transfer unit for transferring loads (1) between conveyor lines (100, 200, 300, 310), preferably changing a transfer direction and/or according to claim 10 or 11, wherein the transfer unit comprises:
- a first support (10 - 12);
- a second support (20 - 22); and
- a cam mechanism (30-34, 40-44, 60-63) for reversible lowering the first support from an upper position and, coupled with said lowering, lifting the second support to an upper position such that in
- a first state of the cam mechanism
the second support is below its upper position and
the first support is in its upper position providing a contact surface (C) of the transfer unit at an entry level for supporting a load when being transferred onto the transfer unit from a first conveyor line in an input transfer direction;
- a second state of the cam mechanism
the first support is below its upper position and
the second support is in its upper position providing a contact surface (C) of the transfer unit at an exit level for supporting a load when being transferred from the transfer unit onto a second conveyor line in an output transfer direction, preferably different from the input transfer direction; and
- an intermediate state of the cam mechanism the first and second support together provide a contact surface (C) of the transfer unit for supporting a load.

2. The transfer unit according to claim 1, wherein a vertical distance between at least two, preferably all three, of
- the common contact surface of the transfer unit provided by the first and second support in the intermediate state of the cam mechanism,
- the contact surface of the transfer unit at the entry level provided by the first support in the first state of the cam mechanism, and
- the contact surface of the transfer unit at the exit level provided by the second support in the second state of the cam mechanism
is less than 10 mm, preferably less than 2 mm, more preferably less than 1 mm, even more preferably 0 mm.

3. The transfer unit according to one of the preceding claims, configured such that a vertical movement of a load (1) while being transferred from the first conveyor line to the second conveyor line via the transfer unit is less than 10 mm, preferably less than 2 mm, more preferably less than 1 mm, even more preferably 0 mm.

4. The transfer unit according to one of the preceding claims, wherein
- the first support comprises at least one first base (10) and the cam mechanism comprises a first guidance (61) guiding said at least one first base in lifting direction and/or at least one first cam (31) for lifting said at least one first base into its upper position, thereby lifting the first support into its upper position; and/or
- the second support comprises at least one second base (20) and the cam mechanism comprises a second guidance (62) guiding said at least one second base in lifting direction and/or at least one second cam (32) for lifting said at least one second base into its upper position, thereby lifting the second support into its upper position.

5. The transfer unit according to the preceding claim, wherein
- the cam mechanism comprises at least one additional first cam (41) for lifting said at least one first base (10) into its upper position and/or at least one additional second cam (42) for lifting said at least one second base (20) into its upper position; and/or
- the first support comprises at least one further first base (11) and the cam mechanism comprises a further first guidance (63) guiding said at least one further first base in lifting direction and/or at least one further first cam, preferably said at least one further first cam (33) and at least one additional further first cam (43), for lifting said at least one further first base (11) into its upper position, the first support being lifted into its upper position corporately by said lifting of said at least two first bases into their upper positions; and/or
- the second support comprises at least one further second base (21) and the cam mechanism comprises a further second guidance guiding said at least one further second base in lifting direction and/or at least one further second cam, preferably said at least one further second cam (34) and at least one additional further second cam (44), for lifting said at least one further second base into its upper position, the second support being lifted into its upper position corporately by said lifting of said at least two second bases into their upper positions; and/or
- the cam mechanism comprises at least one drive shaft (30) comprising said at least one first cam (31) for lifting said at least one first base (10) and said at least one second cam (32) for lifting said at least one second base (20), preferably further comprising said at least one further first cam (33) for lifting said at least one further first base (11) and/or said at least one further second cam (34) for lifting said at least one further second base (21), the cam mechanism preferably comprising at least one additional drive shaft (40) comprising said at least one additional first cam, preferably said at least one additional first cam (41) and said additional further first cam (43), and/or said at least one additional second cam, preferably said at least one additional second cam (42) and said additional further second cam (44); and/or
- said at least one first base and/or said at least one further first base and/or said at least one second base and/or said at least one further second base comprises at least one movable, preferably rotatable, transport element, preferably at least one transport roller (12), transport wheel or transport chain (22).

6. The transfer unit according to the preceding claim, wherein said at least one drive shaft is, preferably said at least one drive shaft and said at least one additional drive shaft are, rotatable in:
- at least one first rotational position in which the first support is positioned by the first cam or first cams respectively in its upper position and the second support is positioned by the second cam or second cams respectively below its upper position, preferably is positioned by the second cam or second cams respectively in a bottom position; and
- at least one second rotational position, preferably 180° from the first rotational position, in which the second support is positioned by the second cam or second cams respectively in its upper position and the first support is positioned by the first cam or first cams respectively below its upper position, preferably is positioned by the first cam or first cams respectively in a bottom position.

7. The transfer unit according to the preceding claim, wherein said at least one drive shaft is, preferably said at least one drive shaft and said at least one additional drive shaft are, rotatable in at least one further rotational position, preferably 90° or 270° from the first rotational position, in which the first support is positioned by the first cam or first cams respectively in its upper position and the second support is positioned by the second cam or second cams respectively in its upper position.

8. The transfer unit according to one of the three preceding claims, comprising at least one drive (50) to rotate the at least two drive shafts (30, 40).

9. A system comprising a first conveyor line (100) for transferring loads (1) to a transfer unit according to one of the preceding claims in the input transfer direction, a second conveyor line (200) for transferring loads (1) from said transfer unit in the output transfer direction, and said transfer unit for transferring loads (1) between said conveyor lines, preferably changing a transfer direction and/or according to claim 10 or 11.

10. A method for transferring loads (1) between conveyor lines (100, 200, 300, 310), preferably changing a transfer direction, using a system according to the preceding claim, comprising the steps:
- transferring at least one load (1) from the first conveyor line (100) onto the first support with the cam mechanism being in its first state;
- bringing the cam mechanism from its first state into its intermediate state and then into its second state so as to pass support of said load from the first to the second support; and
- transferring the load from the second support onto the second conveyor line with the cam mechanism being in its second state.

11. The method according to the preceding claim, comprising the steps:
- transferring at least one further load from a conveyor line onto the first support with the cam mechanism being in its first state and transferring said load from the first support onto another conveyor line with the cam mechanism being in its first state; and/or
- transferring at least one further load from a conveyor line onto the second support with the cam mechanism being in its second state and transferring said load from the second support onto another conveyor line with the cam mechanism being in its state; and/or
- transferring at least one further load between the first or second conveyor line and a third conveyor line of the system via the transfer unit changing a transfer direction by receiving said further load with the transfer unit's cam mechanism in one of the first and second state and dispensing said further load with the transfer unit's cam mechanism in the other of the first and second state.
